# EUROPÄISCHE PATENTSCHRIFT

(11) **EP 3 987 917 B1**
(45) Veröffentlichungstag und Bekanntmachung des Hinweises auf die Patenterteilung: **17.09.2025**
(21) Anmeldenummer: 21193155.5
(22) Anmeldetag: 26.08.2021
(51) Int. Cl.: A01F 15/10, A01D 75/18, B65G 47/34, B65G 15/10

(54) **FÖRDERVORRICHTUNG FÜR EINE LANDWIRTSCHAFTLICHE MASCHINE**
TRANSPORT DEVICE FOR AN AGRICULTURAL MACHINE
DISPOSITIF DE TRANSPORT POUR UN MACHINE AGRICOLE

(30) Priorität: 20.10.2020 DE 102020127544
(43) Veröffentlichungstag der Anmeldung: 27.04.2022
(73) Patentinhaber: Knospe, Bernd, 90765 Fürth (DE)
(72) Erfinder: Knospe, Bernd, 90765 Fürth (DE)
(74) Vertreter: Kanzlei Dr. Negendanck Patentmanufaktur

(56) Entgegenhaltungen:
- EP-B1- 2 869 692
- EP-B2- 1 621 066
- WO-A1-2019/166842
- JP-B2- 4 603 517
- US-A- 5 443 421
- US-A1- 2018 317 395

## Beschreibung

Die Erfindung betrifft eine landwirtschaftliche Maschine mit einer Fördervorrichtung mit den Merkmalen des Anspruch 1.

Bekannt sind Förderanlagen, z.B. Bandförderer oder Rollenförderer, zum Fördern von Materialien, z.B. Schüttgut oder einzelnen Objekten. Beispielsweise als Bandförderer weist diese ein oder mehrere angetriebene Förderbänder auf, welcher die Materialien über kurze oder lange Strecken und/oder über Steigungen befördert. Die Förderanlagen können Verteilungs- und/oder Lenkungseinrichtungen aufweisen, um die Materialen über ein Fördernetz der Förderanlage an unterschiedliche Orte zu befördern. Zudem sind Sortieranlagen bekannt, welche die geförderten Materialien auf der Förderanlage erkennen, um diese zu verteilen oder auszusondern. Förderanlagen sind zudem in der Landwirtschaft bekannt, um beispielsweise ein Erntegut, z.B. Getreide, von einem Schneid- und/oder Mähwerk in eine Verarbeitungsanlage der landwirtschaftlichen Maschine zu befördern. Die Förderanlage ist beispielsweise als ein Kettenförderer ausgebildet, wobei eine Sicherheitsanlage ausgebildet ist, Fremdkörper im Erntegut zu erkennen und diese auszusondern.

Dabei zeigt die Druckschrift DE 10 2004 035 928 A1 eine landwirtschaftliche Arbeitsmaschine mit einer Schutzvorrichtung im Einzugsbereich eines Arbeitsorgans. Die Schutzvorrichtung weist einen Fremdkörperdetektor auf, mit dem Fremdkörper im Erntegutstrom detektiert werden, wobei der Fremdkörperdetektor aus mehreren quer zur Fahrtrichtung der landwirtschaftlichen Arbeitsmaschine nebeneinander angeordneten Sensierelementen besteht, wobei die Sensierelemente die Fremdkörper unabhängig voneinander ortsaufgelöst detektieren.

In der Druckschrift JP 4 603517 B2 wird eine technische Anlage zur Furnierherstellung aus einem Baumstamm offenbart, die einen Sensor, eine Schneidwalze und Förderbänder, die zur Sortierung klappbar ausgeführt sind, aufweist. Der Aufbau der Anlage in den Zeichnungen lässt auf eine eher stationäre Anlage schließen. Die Baustämme sind leichter zur Anlage zu transportieren, als die Anlage in den Wald und die Furnierrollen aus dem Wald.

Der Erfindung liegt die Aufgabe zugrunde, eine landwirtschaftliche Maschine mit einer Fördervorrichtung zu schaffen, welche eine erhöhte Detektionssicherheit aufweist und sich durch einen geringen Ausschuss an Material beim Auswerfen des Fremdkörpers auszeichnet.

Diese Aufgabe wird durch eine landwirtschaftliche Maschine mit der Fördervorrichtung mit den Merkmalen des Anspruch 1 gelöst. Bevorzugte oder vorteilhafte Ausführungsformen der Erfindung ergeben sich aus den Unteransprüchen, der nachfolgenden Beschreibung und/oder den beigefügten Figuren.

Die Erfindung betrifft eine landwirtschaftliche Maschine mit einer Fördervorrichtung zur Förderung eines Materialstroms eines Materials, insbesondere eines Materialstroms eines Erntegutes. Vorzugsweise fördert die Fördervorrichtung einen kontinuierlichen Materialstrom aus dem Material. Beispielsweise ist das Material als oberirdische Biomasse von Pflanzen und/oder Pflanzenhalme ausgebildet, wobei der Materialstrom durch das lose zusammenhängende Material als eine Art Materialgeflecht und/oder - matte ausgebildet ist. Unter Materialstrom ist grundsätzlich ein Fördergut in Bewegung zu verstehen, welcher von einer Aufnahmestelle zu einer oder mehreren Entnahmestellen der Fördervorrichtung befördert werden kann. Grundsätzlich kann ein beliebiges Erntegut und/oder Nebenprodukt bei der Ernte als Material mit der Fördervorrichtung befördert werden. Besonders bevorzugt ist das Material als Heu, Stroh und/oder Grassilage ausgebildet.

Die landwirtschaftliche Maschine ist vorzugsweise geeignet, das Material auf einer landwirtschaftlichen Fläche aufzunehmen und/oder zu ernten und der Fördervorrichtung zum Fördern zu übergeben. Vorzugsweise weist die landwirtschaftliche Maschine eine Verarbeitungsvorrichtung auf, wobei die Fördervorrichtung zum Fördern des Materialstrom zu der Verarbeitungsvorrichtung ausgebildet ist. Die landwirtschaftliche Maschine oder die Verarbeitungsvorrichtung ist beispielsweise als eine Ballenpresse ausgebildet, wobei die Ballenpresse ausgebildet ist, das lose Material aufzunehmen und zu Materialballen oder Materialpacken zu pressen beziehungsweise zu wickeln. Die Fördervorrichtung ist vorzugsweise zwischen einer Materialaufnahmevorrichtung und der Verarbeitungsvorrichtung der landwirtschaftlichen Maschine fördertechnisch geschaltet und/oder ausgebildet. Alternativ weist die Fördervorrichtung Mittel zur Aufnahme des Materials auf, sodass die Fördervorrichtung vor die landwirtschaftliche Maschine beziehungsweise die Verarbeitungsvorrichtung fördertechnisch geschaltet und/oder ausgebildet ist.

Die Fördervorrichtung weist mindestens eine Förderbahn zur Beförderung des Materialstroms auf. Die Förderbahn ist bevorzugt als eine gerade Bahn und/oder Strecke ausgebildet, wobei die Förderbahn im Wesentlichen die Strecke und/oder die Entfernung darstellt, welche das Material durch die Fördervorrichtung befördert wird und/oder beförderbar ist. Vorzugsweise ist die Förderbahn ansteigend ausgebildet, sodass der Materialstrom über einen Anstieg durch die Fördervorrichtung gefördert wird und/oder förderbar ist. Beispielsweise ist die Förderbahn an der landwirtschaftlichen Maschine zum Überwinden eines Höhenunterschiedes zwischen der landwirtschaftlichen Fläche und/oder der Materialaufnahmevorrichtung und der Verarbeitungsvorrichtung schräg angeordnet.

Ferner definiert die Förderbahn eine Förderrichtung für den Materialstrom. Die Förderbahn weist vorzugsweise die Aufnahmestelle und die Entnahmestelle auf, wobei der Materialstrom in Förderrichtung von der Aufnahmestelle zu der Entnahmestelle beförderbar ist. Die Förderbahn ist vorzugsweise zum Führen des Materialstroms ausgebildet, wobei die Förderbahn vorzugsweise seitliche Begrenzungsabschnitte aufweist. Die Begrenzungsabschnitte sind geeignet, den Materialstrom zu führen und/oder diesen zu komprimieren. Beispielsweise sind die seitlichen Begrenzungsabschnitte trichterförmig an der Förderbahn angeordnet, sodass der Materialstrom beim Vorbeibewegen verdichtet wird.

Die Fördervorrichtung weist mindestens eine Bandfördereinrichtung zum Fördern des Materialstroms auf, wobei die Bandfördereinrichtung innerhalb der Förderbahn angeordnet ist. Die Bandfördereinrichtung ist vorzugsweise als ein Stetigförderer ausgebildet, wobei die Bandfördereinrichtung vorzugsweise mindestens ein Förderband aufweist. Das Förderband ist vorzugsweise als ein Gurtband, z.B. ein gummiertes Gurtband, ausgebildet, wobei das Förderband als ein endloses Band ausgebildet ist. Die Bandfördereinrichtung weist mindestens eine Antriebseinheit zum Antreiben des Förderbandes auf. Beispielsweise treibt die Antriebseinheit ein oder mehrere Rollen der Bandfördereinrichtung an, wobei die Rollen rotierbar innerhalb des Förderbandes zum endlosen Umlaufen des Förderbandes angeordnet sind. Optional ist das Förderband als eine Schräg- oder Steilförderband ausgebildet, wobei das Förderband mehrere Querlamellen zur Mitnahme des Materialstroms aufweist.

Die Bandfördereinrichtung ist innerhalb der Förderbahn angeordnet, wobei die Bandfördereinrichtung vorzugsweise zumindest in einem Bahnabschnitt der Förderbahn zum fördertechnischen Antreiben des Materialstroms angeordnet ist. Beispielsweise ist die Bandfördereinrichtung an einem bodenseitigen Bahnabschnitt der Förderbahn angeordnet, wobei der Materialstrom oberhalb der Bandfördereinrichtung auf dem Förderband beförderbar ist. Bevorzugt bilden ein oder mehrere Bandfördereinrichtung die Förderbahn. Alternativ ist die Bandfördereinrichtung an einem seitlichen Bahnabschnitt der Förderbahn angeordnet, wobei die Bandfördereinrichtung beispielsweise die Querlamellen und/oder Transportstege zur Mitnahme des Materialstroms entlang der Förderbahn aufweist.

Ferner weist die Bandfördereinrichtung einen Auswurfabschnitt zum Ausschwenken aus der Förderbahn auf. Der Auswurfabschnitt ist vorzugsweise als ein Endabschnitt der Bandfördereinrichtung ausgebildet, wobei die Bandfördereinrichtung mit dem Auswurfabschnitt zum Auswerfen von Material ausgebildet ist. Insbesondere weist die Bandfördereinrichtung einen Schwenkabschnitt auf, wobei der Schwenkabschnitt mit dem Auswurfabschnitt wirktechnisch verbunden ist, wobei der Schwenkabschnitt beim Ausschwenken des Auswurfabschnitt innerhalb der Förderbahn verbleiben angeordnet ist. Der Schwenkabschnitt weist vorzugsweise eine Schwenkachse auf, wobei die Bandfördereinrichtung um die Schwenkachse schwenkbar ausgebildet ist, um den Auswurfabschnitt aus der Förderbahn zu schwenken. Vorzugsweise ist der Auswurfabschnitt in Förderrichtung nach dem Schwenkabschnitt ausgebildet. In Förderrichtung hinter und/oder vor dem Auswurfabschnitt können benachbarte Bandfördereinrichtungen zu einer gemeinsamen Bandfördereinrichtung zusammengefasst sein. Die Förderbahn ist dann als eine gedachte Förderbahn zu verstehen.

Ferner ist vorgesehen, dass die Bandfördereinrichtung aus der Förderbahn schwenkbar ausgebildet ist, um den Materialstrom von der Förderrichtung in eine Auswerfrichtung umzulenken. Die Auswerfrichtung ist vorzugsweise um einen Winkel von mindestens 30°, bevorzugt von mindestens 45°, im Speziellen von mindestens 60°, zu der Förderrichtung versetzt ausgebildet. Die Förderrichtung führt den Materialstrom vorzugsweise weiter zur landwirtschaftlichen Maschine und/oder der Verarbeitungsvorrichtung der landwirtschaftlichen Maschine, wobei die Auswerfrichtung derart ausgebildet ist, dass der Materialstrom aus der Fördervorrichtung und/oder der landwirtschaftlichen Maschine geführt ist. Die Bandfördereinrichtung ist in Auswerfrichtung schwenkbar und/oder definiert diese durch die Schwenkrichtung. Beispielsweise fördert die Bandfördereinrichtung stetig das Material entlang der Förderbahn in Richtung der Förderrichtung, wobei beim Schwenken der Bandfördereinrichtung aus der Förderbahn der Materialstrom zum Auswerfen aus der Fördervorrichtung in Auswerfrichtung umgelenkt ist.

Im Rahmen der Erfindung wird vorgeschlagen, dass die Fördervorrichtung mindestens eine Schneideeinrichtung aufweist, um den Materialstrom beim Fördern in die Auswerfrichtung von dem in Förderrichtung geförderten Materialstrom zu trennen. Die Schneideeinrichtung ist beispielsweise geeignet, den Materialstrom in einem Trennverfahren zu trennen. Beispielsweise trennt die Schneidevorrichtung den Materialstrom in einem spanenden Fertigungsverfahren, z.B. durch Sägen, und/oder in einem Trennverfahren, wie z.B. durch Scherschneiden. Die Schneideeinrichtung weist vorzugsweise mehrere Schneidemesser zum Schneiden auf, um den Materialstrom entlang der Auswerfrichtung, insbesondere längs der Auswerfrichtung, zu schneiden. Der Materialstrom ist durch das Schwenken der Bandfördereinrichtung in Auswerfrichtung führbar, wobei der Materialstrom der Scheideeinrichtung zum Austrennen von Material zugeführt wird und/oder zuführbar ist. Vorzugsweise ist die Scheideeinrichtung stationär an der Fördervorrichtung angeordnet, sodass der Materialstrom beim Fördern in Auswerfrichtung durch die stationären Scheidemesser zum Schneiden in Längsrichtung in Bezug auf die Auswerfrichtung geschnitten wird und/oder schneidbar ist. Die Schneidemesser sind vorzugsweise als Rollenschneidemesser oder als Säge- und/oder Schneideblätter ausgebildet, wobei die Schneidemesser rotierbar an der Schneidevorrichtung angeordnet sind. Alternativ sind die Schneidemesser als Schneidbalken und/oder Trennmesser und/oder Schermesser zum Spalten oder Scherscheiden oder Stanzen ausgebildet. Die Schneidemesser sind vorzugsweise benachbart zur Förderbahn ausgebildet. Besonders bevorzugt weist die Schneideeinrichtung mindestens zwei Schneidemesser auf, wobei mindestens jeweils ein Schneidemesser randseitig der Förderbahn angeordnet ist, sodass die mindestens zwei Schneidemesser parallel zueinander an zwei gegenüberliegenden Seiten der Förderbahn angeordnet sind. Besonders bevorzugt trennt die Schneideeinrichtung den Materialstrom lediglich beim Fördern in Auswerfrichtung, wobei beim Fördern in Förderrichtung der Materialstrom zusammenhängend ausgebildet ist. Die Schneideeinrichtung ist vorzugsweise an der Fördervorrichtung zum Trennen des Materialstrom in Förderrichtung von einem weiteren Materialstrom in Auswerfrichtung angeordnet. Beispielsweise ist der Materialstrom aus einem kontinuierlich geförderten und zusammenhängenden Material gebildet, wobei beim Umleiten von der Förderrichtung in die Auswerfrichtung der Materialstrom von der Scheideeinrichtung geschnitten wird und/oder schneidbar ist.

Vorteilhaft ist, dass die Fördervorrichtung mit der Bandfördereinrichtung ausgebildet ist, den Materialstrom von der Förderrichtung in die Auswerfrichtung umzuleiten, wobei die Fördervorrichtung die Schneideeinrichtung aufweist, um den Materialstrom aus zusammenhängendem Material, z.B. Stroh, beim Umlenken zu trennen, sodass eine Fördervorrichtung geschaffen, welche besonders unanfällig für Störungen, z.B. Materialstau, beim Fördern und/oder Umlenken des Materialstroms ist. Besonders vorteilhaft ist, dass durch das Umlenken in Auswerfrichtung eine Fördervorrichtung geschaffen ist, welche Material mit Fremdkörpern, z.B. Steine oder metallische Objekte, auswerfen kann, sodass die landwirtschaftliche Maschine vor Beschädigungen durch den Fremdkörper geschützt ist. Beispielsweise ist die landwirtschaftliche Maschine als Ballenpresse zur Herstellung von Stroh-, Heu-und/oder Grassilagenballen ausgebildet, wobei beispielsweise die Strohballen als Futtermittel oder Futterzugabe für Kühe und/oder Rinder dienen. Durch die Fördervorrichtung können Fremdkörper vor der Verarbeitung des Materials, z.B. zu Strohballen, ausgeworfen werden, sodass verhindert wird, dass Tiere beim Füttern mit dem Material (Stroh) durch die Fremdkörper verletzt werden oder sogar daran verenden. Die Fördervorrichtung wirft durch ein exaktes Austrennen der Schneideeinrichtung beim Auswerfen eines Fremdkörpers besonders wenig nutzbares Materials mit aus. Dadurch ist eine Fördervorrichtung mit Schneideeinrichtung geschaffen, welche sich durch einen geringen Ausschuss an Material beim Auswerfen des Fremdkörpers auszeichnet.

In einer bevorzugten Ausgestaltung der Erfindung ist vorgesehen, dass die Schneideeinrichtung an der Bandfördereinrichtung oder benachbart zur Bandfördereinrichtung seitens des Auswurfabschnitts zum Austrennen des Materialstroms angeordnet ist. Beispielsweise ist die Schneideeinrichtung an der Bandfördereinrichtung angeordnet, wobei die Schneideeinrichtung vorzugsweise mit dem Auswurfabschnitt verbunden ist. Die Schneideeinrichtung ist ausgebildet, den Materialstrom beim Verschwenken des Auswurfabschnitts aus der Förderbahn zu trennen. Vorzugsweise ist dazu vorgesehen, dass die Schneideeinrichtung mit dem Auswerfabschnitt der Bandfördereinrichtung mit verschwenkbar ausgebildet ist. Die Schneideeinrichtung weist vorzugsweise einen Hebeeinrichtung zum Ausfahren von Schneidemessern auf. Die Hebeeinrichtung fährt die Schneidemesser beispielsweise beim Schwenken der Bandfördereinrichtung in Auswerfrichtung aus, sodass die Schneidemesser den Materialstrom beim Fördern in Auswerfrichtung durchtrennen. Die Hebeeinrichtung ist vorzugsweise ausgebildet, die Schneidemesser beim Zurückschwenken der Bandfördereinrichtung in die Förderbahn einzuklappen, sodass der Materialstrom ungetrennt in Förderrichtung beförderbar ist. Vorzugsweise sind die Schneidemesser der Schneideeinrichtung durch den Antrieb der Bandfördereinrichtung mit antreibbar ausgebildet.

Alternativ ist die Schneideeinrichtung benachbart zu dem Auswurfabschnitt angeordnet. Vorzugsweise ist die Schneideeinrichtung in einem Auswurfbereich des Materialstroms in Auswerfrichtung angeordnet. Die Scheidevorrichtung ist insbesondere stationär mit der Fördervorrichtung verbunden, sodass der Materialstrom beim Schwenken in Auswerfrichtung in einen Schneidebereich der Schneideeinrichtung geführt wird und/oder führbar ist. Beispielseise weist die Schneideeinrichtung rotierende Rollenschneidemesser auf, welche beispielsweise unterhalb der Förderbahn angeordnet sind, wobei die Bandfördereinrichtung mit dem Auswurfabschnitt in den Schneidebereich der Scheideeinrichtung schwenkbar ist. Vorzugsweise sind die Schneidemesser mit der Fördervorrichtung und/oder der landwirtschaftlichen Maschine antriebstechnisch verbunden. Alternativ weist die Schneideeinrichtung eine Motoreinheit zum Rotieren oder zum Stanzbewegen der Scheidemesser auf.

In einer bevorzugten Ausgestaltung der Erfindung ist vorgesehen, dass die Bandfördereinrichtung zwischen einer Förderposition und einer Auswerfposition schwenkbar ist, wobei in der Förderposition die Bandfördereinrichtung den Materialstrom in Förderrichtung befördert, wobei in der Auswerfposition die Bandfördereinrichtung den Materialstrom in Auswerfrichtung befördert. Insbesondere ist der Auswurfabschnitt der Bandfördereinrichtung zwischen der Förderposition und der Auswurfposition schwenkbar, vorzugsweise um die Schwenkachse des Schwenkabschnittes der Bandfördereinrichtung. Vorzugsweise weist die Bandfördereinrichtung eine Schwenkeinheit zum Ausführen der Schwenkbewegung auf. Die Schwenkeinheit ist vorzugsweise als ein elektromechanischer oder hydraulischer Schwenkmechanismus ausgebildet. Beispielsweise weist der Schwenkmechanismus einen elektrischen Motor und ein Schwenkgestänge auf, wobei der elektrische Motor mit dem Schwenkgestänge zum Stellen der Bandfördereinrichtung in die Förder- und Auswerfposition antriebstechnisch verbunden ist. Alternativ ist der Schwenkmechanismus über einen mechanischen Antrieb der landwirtschaftlichen Maschine antreibbar. Beispielsweise wird das Schwenkgestänge der Schwenkeinheit über eine Koppelstange der landwirtschaftlichen Maschine angetrieben und/oder betätigt, sodass die Bandfördereinrichtung zwischen der Förder- und Auswerfposition schwenkbar ist.

Ferner ist vorgesehen, dass die Schneideeinrichtung in der Auswerfposition den Materialstrom trennt, um zumindest einen Materialabschnitt des Materialstroms zum Auswurf aus der Fördervorrichtung aus zu trennen. Die Schneideeinrichtung ist in der Auswerfposition zum Austrennen von zumindest einem Materialabschnitt des Materialstroms ausgebildet. Der Materialabschnitt weist beispielsweise einen Fremdkörper auf, wobei die Schneideeinrichtung den Materialabschnitt zusammen mit dem Fremdkörper aus dem Materialstrom austrennt, sodass die in Auswerfposition geschwenkte Bandfördereinrichtung diese aus der Fördervorrichtung auswirft. Vorteilhaft ist, dass ein Materialabschnitt aus dem Materialstrom austrennbar ist, sodass beispielsweise ein Fremdkörper, welcher mit dem Material verbunden und/oder eingeschlossen ist, aus der Förderbahn und/oder der Fördervorrichtung zuverlässig ausgeworfen werden kann. Durch die Schneideeinrichtung ist sichergestellt, dass der auszuwerfende Materialabschnitt von dem Materialstrom getrennt wird, wobei die Abschnittsgröße des Materialabschnitts an den zu entfernenden Fremdkörper anpassbar ist. Beispielsweise weist der Materialabschnitt eine Flächenausdehnung von mindestens 50 cm², bevorzugt von mindestens 100 cm², im Speziellen von mindestens 300 cm², auf.

In einer bevorzugten Weiterentwicklung der Erfindung ist vorgesehen, dass die Schneideeinrichtung den Materialstrom in der Auswerfposition der Bandfördereinrichtung in Auswerfrichtung trennt, wobei beim Zurückschwenken der Bandfördereinrichtung in die Förderposition die Schneideeinrichtung den Materialstrom quer zur Auswerfrichtung trennt. Die Schneideeinrichtung ist zum Trennen des Materialstroms in Auswerfrichtung in der Auswerfposition der Bandfördereinrichtung ausgebildet, wobei die Schneideeinrichtung zum Quertrennen des Materialstroms beim Zurückschwenken der Bandfördereinrichtung in die Förderposition ausgebildet ist. Die Schneideeinrichtung weist mindestens ein Querschneidemesser und/oder einen Schneidebalken zum Schneiden des Materialstroms auf. Das Querscheidemesser ist vorzugsweise an der Förderbahn benachbart zu dem Ausschwenkabschnitt der Bandfördereinrichtung angeordnet, sodass beispielsweise beim Hochziehen des Materialstroms in die Förderbahn der Materialabschnitt durch das Querschneidemesser quer geschnitten wird. Alternativ ist das Querschneidemesser an der Bandfördereinrichtung angeordnet, wobei das Querschneidemesser endseitig an dem Auswerfabschnitt angeordnet ist. Vorzugsweise ist das Querschneidemesser der Schneidevorrichtung mit der Hebeeinrichtung zum Ausfahren wirkverbunden, wobei das Querschneidemesser beispielsweise beim Verlagern der Bandfördereinrichtung von der Auswerfposition in die Förderposition zum Abtrennen des Materialabschnitts von dem nachlaufenden Materialstrom durch die Hebeeinrichtung ausgefahren wird und/oder ausfahrbar ist.

In einer weiteren bevorzugten Ausgestaltung der Erfindung ist vorgesehen, dass die Fördervorrichtung mindestens zwei, insbesondere genau zwei oder mehr als zwei, benachbarte Förderbahnen zur gemeinsamen Beförderung des Materialstroms aufweist. Die Förderbahnen bilden vorzugsweise eine gemeinsame Förderfläche zum Befördern des Materialstroms, wobei die Förderbahnen in ihrer Ausdehnung und/oder Ausgestaltung vorzugsweise gleich ausgebildet sind. Die Förderbahnen sind vorzugsweise gleichlang ausgebildet, wobei die Förderbahnen vorzugsweise parallel zueinander angeordnet sind. Besonders bevorzugt weist die Fördervorrichtung mindestens drei oder genau drei Förderbahnen auf.

Ferner ist vorgesehen, dass die Fördervorrichtung mindestens zwei, insbesondere genau zwei oder mehr als zwei, Bandfördereinrichtungen aufweist, wobei jeweils mindestens eine der Bandfördereinrichtungen in einer der Förderbahnen zum gemeinsamen Befördern des Materialstroms angeordnet ist. Vorzugsweise sind mehrere Bandfördereinrichtungen hintereinander in Reihe in einer Förderbahn angeordnet, wobei mindestens eine weitere Förderbahn mit mehreren Bahnfördereinrichtungen parallel zu dieser zum gemeinsamen Befördern des Materialstroms angeordnet ist. Die mehreren Bandfördereinrichtungen befördern den Materialstrom vorzugsweise mit einer gemeinsamen Fördergeschwindigkeit in Förderrichtung, wobei die mehreren Bandfördereinrichtungen einzeln schwenkbar ausgebildet sind. Die einzelnen Bandfördereinrichtungen sind unabhängig voneinander schwenkbar ausgebildet, sodass die Bandfördereinrichtungen unabhängig der Förderbahn und ihrer Anordnung auf dieser schwenkbar sind. Insbesondere weist jede der Bandfördereinrichtungen eine Förderposition und Auswerfposition auf.

In einer bevorzugten Weiterentwicklung der Erfindung ist vorgesehen, dass die mindestens zwei oder genau zwei Bandfördereinrichtungen einzeln schwenkbar ausgebildet sind. Bevorzugt sind die mindestens zwei Bandfördereinrichtungen jeweils zwischen einer Förderposition innerhalb der jeweiligen Förderbahn und einer Auswerfposition außerhalb der jeweiligen Förderbahn schwenkbar ausgebildet. Beispielsweise schwenkt lediglich die Bandfördereinrichtung von der Förderposition in die Auswerfposition aus, auf deren Förderbahn sich der Fremdkörper, z.B. ein Metallsplitter, befindet.

Ferner ist vorgesehen, dass die Scheideeinrichtung zwischen den Bandfördereinrichtungen zum Austrennen von einzelnen Materialabschnitten des Materialstroms aus der jeweiligen Förderbahn ausgebildet ist. Vorzugsweise weist die Schneideeinrichtung mehrere Scheidemesser auf, wobei die mehreren Scheidemesser, z.B. jeweils zwei Scheidemesser, an jeweils einer Bandfördereinrichtung zum selektiven Austrennen von Materialabschnitten angeordnet sind. Beispielsweise ist der Materialabschnitt als ein Materialstreifen mit einer Streifenbreite ausgebildet, welche der Bahnbreite der jeweiligen Förderbahn entspricht. Folglich wird eine Auswurfgenauigkeit und/oder eine Selektionsgenauigkeit zum Austrennen des Fremdkörpers durch die Anzahl der benachbarten Förderbahnen und der Anzahl ihrer Bandfördereinrichtungen bestimmt. Die Materialabschnitte weisen vorzugsweise eine Breite von mindesten 3 cm, bevorzugt von mindesten 5 cm, im Speziellen von mindestens 10 cm, auf.

In einer bevorzugten Ausgestaltung der Erfindung ist vorgesehen, dass die Bandfördereinrichtung ein erstes und ein zweites Förderband zum Führen des Materialstroms aufweist. Die Förderbänder sind vorzugsweise als Gurtbänder ausgebildet, wobei die Förderbänder vorzugsweise aus einem Gummi- oder Kunststoffmaterial mit einer textilen Gewebeeinlage hergestellt sind. Alternativ sind die Förderbänder aus Metall, z.B. als Kettenförderer und/oder Kettenförderband, gefertigt oder weisen ein metallische Gewebeeinlage oder Stützstruktur auf. Optional weisen die Förderbänder die Querlamellen und/oder Transportstege zum Antreiben des Materialstroms auf. Das erste und das zweite Förderband sind beabstandet zueinander angeordnet, sodass zwischen dem ersten und dem zweiten Förderband ein Förderkorridor zur zweiseitigen Führung des Materialstroms ausgebildet ist. Vorzugsweise sind das erste und das zweite Förderband übereinander angeordnet, sodass zwischen diesen der Förderkorridor gebildet ist. Vorzugsweise bilden die mehreren Bandfördereinrichtungen in den mehreren Förderbahnen mit den ersten und den zweiten Förderbändern gemeinsam den Förderkorridor.

Alternativ ist das erste und das zweite Förderband seitlich der Förderbahn ausgebildet, sodass die Bandfördereinrichtung zum seitlichen Auswerfen von Material aus der Förderbahn schwenkbar ausgebildet ist. Vorzugsweise weist das erste und das zweite Förderband mehrere Transportstege zur Mitnahme des Materials beidseitig entlang der Förderbahn auf. Vorzugsweise ist die Bandfördereinrichtung als ein Doppelgurtförderer ausgebildet, wobei die Bandfördereinrichtung als erstes Förderband einen Hauptfördergurt und als zweites Förderband einen Deckfördergurt aufweist.

In einer bevorzugten konstruktiven Weiterentwicklung der Erfindung ist vorgesehen, dass die Bandfördereinrichtung einen ersten und einen zweiten Umlenkstationsabschnitt zum Umlenken des ersten und des zweiten Förderbandes aufweist. Der erste und der zweite Umlenkstationsabschnitt weisen vorzugsweise mehrere Tragrollen zur Förderbandführung auf, wobei die Förderbänder von dem ersten Umlenkstationsabschnitt zu dem zweiten Umlenkstationsabschnitt endlos umlaufen. Vorzugsweise weist die Bandfördereinrichtung einen Tragrahmen auf, wobei der erste und der zweite Umlenkstationsabschnitt jeweils an zwei gegenüberliegenden Enden des Tragrahmens angeordnet sind. Insbesondere sind der erste und der zweite Umlenkstationsabschnitt miteinander verbunden, vorzugsweise stoffschlüssig verbunden. Ferner ist vorgesehen, dass die Bandfördereinrichtung mit dem zweiten Umlenkstationsabschnitt aus der Förderbahn schwenkbar ausgebildet ist. Der zweite Umlenkstationsabschnitt ist insbesondere mit Umlenkbereichen des ersten und des zweiten Förderbands aus der Förderbahn schwenkbar ausgebildet. Besonders bevorzugt schwenken beide Förderbänder gemeinsam in Auswerfrichtung aus der Förderbahn aus. Besonders bevorzugt ist der zweite Umlenkstationsabschnitt als der Auswerfabschnitt der Bandfördereinrichtung ausgebildet. Vorzugsweise ist der zweite Umlenkstationsabschnitt von der Förderposition in die Auswerfposition bewegbar ausgebildet.

In einer bevorzugten Ausgestaltung der Erfindung ist vorgesehen, dass die Fördervorrichtung eine Sortiereinrichtung zur Steuerung des Auswurfs von Material und/oder Materialabschnitten des Materialstroms in Auswerfrichtung aus der Fördervorrichtung durch die Bandfördereinrichtung aufweist. Die Sortiereinrichtung weist vorzugsweise ein Rechenmodul zur Berechnung von Steuersignalen auf, wobei die Sortiereinrichtung mit der Bandfördereinrichtung zur Steuerung des Schwenkens und/oder einer Schwenkposition, insbesondere der Schwenkposition in Förderposition oder in Auswurfposition, datentechnisch verbunden ist. Vorzugsweise weist die Sortiereinrichtung ein Detektionsmodul zur Identifikation eines Fremdkörpers auf, wobei das Detektionsmodul mit dem Rechenmodul verbunden ist oder in diesem integriert ausgebildet ist. Das Detektionsmodul ist zum Erkennen eines Fremdkörpers in dem Materialstrom ausgebildet, wobei das Detektionsmodul beim Erkennen eines Fremdkörpers ein Identifikationssignal an das Rechenmodul sendet, wobei das Rechenmodul ausgebildet ist, auf Basis des Identifikationssignales eine oder mehrere Steuersignale an ein oder mehrere Bandfördereinrichtungen zu senden. Das Rechenmodul ist vorzugsweise ausgebildet, die Steuersignal in Abhängigkeit einer Fördergeschwindigkeit des Materialstroms zu erzeugen, sodass das Schwenken der Bandfördereinrichtung, bevor der Fremdkörper über den Auswerfabschnitt befördert ist, aufgeführt wird und/oder ausführbar ist. Vorzugsweise umfassen die Steuersignale eine oder mehrere Befehle für die Bandfördereinrichtung, insbesondere für die Schwenkeinheit und/oder die Antriebseinheit der Bandfördereinrichtung. Beispielsweis ist die Sortiereinrichtung ausgebildet, die Fördergeschwindigkeit der Bandfördereinrichtung zu steuern. Besonders bevorzugt weist die Fördervorrichtung mehrere Förderbahnen und mehrere Bandfördereinrichtungen auf, wobei die Sortiereinrichtung ausgebildet ist, die Bandfördereinrichtungen einzelnen anzusteuern, um die Bandfördereinrichtungen aus der jeweiligen Förderbahn zum Auswerfen des Materialabschnitts zu schwenken.

In einer bevorzugten Weiterentwicklung der Erfindung ist vorgesehen, dass die Sortiereinrichtung mindestens einen Sensor zum Detektieren von Fremdkörper in dem Materialstrom aufweist, wobei der Sensor innerhalb der Förderbahn vor der Bandfördereinrichtung in Bezug auf die Förderrichtung und/oder an dem ersten Umlenkstationsabschnitt zum Abtasten des Materialstroms angeordnet ist. Die Sensoren sind vorzugsweise als ein optischer Sensor und/oder als ein induktiver Sensor zur Erkennung von metallischen Objekten ausgebildet. Beispielsweise ist der optische Sensor mit einem Aufnahmemodul der Sortiereinrichtung zur Erfassung von mehreren Bildern und/oder Bilddaten verbunden, wobei das Aufnahmemodul die mehreren Bilder und/oder Bilddaten an das Detektionsmodul zur Erkennung des Fremdkörpers in den mehreren Bildern und/oder den Bilddaten sendet.

Alternativ oder optional ergänzend ist der Sensor als ein induktiver Sensor zur Erkennung von metallischen Objekten, z.B. Kronkorken, Schrauben oder dergleichen, ausgebildet, wobei der induktive Sensor vorzugsweise mit einem Erfassungsmodul der Sortiereinrichtung verbunden ist, wobei das Erfassungsmodul ausgebildet ist, Erfassungsbereichsdaten des induktiven Sensors dem Detektionsmodul bereitzustellen.

Vorzugsweise weist die Fördervorrichtung die mehreren Förderbahnen mit den mehreren Bandfördereinrichtungen auf, wobei besonders bevorzugt mehrere Sensoren zum Erfassen mehrerer Überwachungsabschnitte der Förderbahnen angeordnet sind. Die Überwachungsabschnitte sind vor der jeweiligen Bandfördereinrichtung an den Förderbahnen angeordnet, wobei beim Befördern des Materialstroms dieser durch die Überwachungsabschnitte gefördert wird und/oder förderbar ist, um den Materialstrom abschnittsweise durch die Sensoren in den Überwachungsabschnitten zu erfassen.

Alternativ oder optional ergänzend ist der Sensor an dem ersten Umlenkstationsabschnitt der Bandfördereinrichtung angeordnet, wobei der Sensor den durch die jeweilige Bandfördereinrichtung geförderten Teilbereich des Materialstrom unmittelbar erfasst, um Fremdkörper in diesem zu detektieren. Beispielsweise ist zwei oder mehr Sensoren seitlich des ersten Umlenkstationsabschnitt angeordnet, wobei die zwei oder mehr Sensoren zum Abtasten des Materialstroms auf dem Förderband gegenüberliegend angeordnet sind.

In einer bevorzugten Weiterentwicklung der Erfindung ist vorgesehen, dass die Sortiereinrichtung zum Ansteuern eines Ausschwenkens der Bandfördereinrichtung nach Detektion des Fremdkörpers im Materialstrom ausgebildet ist, wobei, insbesondere nach dem Ansteuern, zumindest der Auswurfabschnitt, insbesondere der zweite Umlenkstationsabschnitt, im Speziellen der zweite Umlenkstationsabschnitt mit dem ersten und dem zweiten Förderband der Bandfördereinrichtung, außerhalb der Förderbahn zum Fördern in Auswerfrichtung angeordnet ist, um den Materialabschnitt mit dem Fremdkörper aus der Fördervorrichtung auszuwerfen. Nach dem Detektieren durch die Sortiereinrichtung ist die Bandfördereinrichtung vorzugsweise in der Auswerfposition angeordnet. Beispielsweise durchläuft ein Fremdkörper einen der Überwachungsabschnitte und/oder wird von einem auf die Förderbahn ausgerichteten Sensor erfasst, wobei die Sortiereinrichtung ausgebildet ist, ein Steuersignal an die entsprechende Bandfördereinrichtung zu senden, um diese in Auswurfrichtung und/oder in die Auswurfposition zu schwenken, sodass die Schneideeinrichtung den demensprechenden Materialabschnitt mit dem Fremdkörper aus dem Materialstrom austrennt, wobei der Materialabschnitt mit dem Fremdkörper aus der Förderbahn und/oder Fördervorrichtung ausgeworfen wird und/oder auswerfbar ist.

Bei einer möglichen Weiterbildung der Erfindung ist vorgesehen, dass die Sortiereinrichtung und/oder eine weitere Steuereinrichtung ausgebildet ist, mehrere Auswurfabschnitte zeitgleich und/oder gemeinsam auszuklappen, um größere Störkörper aus dem Materialstrom und/oder einen breiteren Materialstrom in die Auswerfeinrichtung auszusondern. Diese Weiterbildung hat den Vorteil, dass auch Störkörper ausgesondert werden können, die breiter als eine einzige Förderbahn sind.

Optional ergänzend kann bei dem gemeinsamen Ausklappen der Auswurfabschnitte vorgesehen ein, dass die Schneideinrichtungen in eine Parkposition verfahren werden, so dass diese beim Aussondern des Materialstroms keine Störkontur bilden. Mit dieser Ergänzung ist es möglich, dass der ausgesonderte Materialstrom ungeteilt ausgesondert werden kann. Damit ist es ebenfalls möglich, die breiteren Störkörper, wie z.B. ein Zaunabschnitt oder ein Tierkadaver, unzerschnitten auszustoßen.

In einer weiteren Weiterentwicklung der Erfindung ist vorgesehen, dass die Sortiereinrichtung zum Ansteuern eines Einschwenkens der Bandfördereinrichtung nach Auswerfen des Materialabschnitts mit dem Fremdkörper ausgebildet ist, wobei, insbesondere nach dem Ansteuern, die Bandfördereinrichtung mit dem Auswerfabschnitt, insbesondere der zweite Umlenkstationsabschnitt, im Speziellen der zweite Umlenkstationsabschnitt mit dem ersten und dem zweiten Förderband der Bandfördereinrichtung, innerhalb der Förderbahn angeordnet ist, um den Materialstrom zurück in Förderrichtung zu fördern. Die Bandfördereinrichtung ist nach dem Auswerfen des Materialabschnitts mit dem Fremdkörper, und insbesondere nach dem Ansteuern der Sortiereinrichtung, in der Förderposition zum Befördern des Materialstroms in Förderrichtung angeordnet. Beispielsweise ist der Materialabschnitt mit dem Fremdkörper durch die Schneideeinrichtung ausgetrennt und durch die Bandfördereinrichtung in Auswerfrichtung aus der Förderbahn und/oder Fördervorrichtung ausgeworfen, z.B. zurück auf die landwirtschaftliche Fläche oder in einen Auffangbehälter der landwirtschaftlichen Maschine, wobei die Sortiereinrichtung der geschwenkten Bandfördereinrichtung ein Steuersignal zum Einschwenken in die Förderbahn und/oder in die Förderposition sendet, sodass der Materialstrom wieder vollständig in die Förderbahn in Richtung der Förderrichtung geleitet beziehungsweise befördert wird und/oder beförderbar ist.

In einer bevorzugten Weiterentwicklung ist vorgesehen, dass die Bandfördereinrichtung, wie zuvor beschreiben, nach dem Auswerfen des Fremdkörpers wieder einschwenkbar ausgebildet ist, wobei die Sortiereinrichtung zum Ansteuern des Einschwenkens der Bandfördereinrichtung nach Detektion des Fremdkörpers beim Auswurf aus der Fördervorrichtung und/oder der Förderbahn ausgebildet ist, wobei die Sortiereinrichtung mindestens einen weiteren Sensor aufweist, wobei der weitere Sensor an dem zweiten Umlenkstationsabschnitt und/oder dem Auswurfabschnitt zur Detektion des Auswurfes des Fremdkörpers angeordnet ist. Vorzugsweise ist der weitere Sensor als ein optischer oder ein induktiver Sensor ausgebildet, um beispielsweise einen metallischen Fremdkörper zu erfassen. Vorteilhaft ist, dass der weitere Sensor sicherstellt, dass der Fremdkörper die Fördervorrichtung tatsächlich verlassen hat, sodass ein zu schnelles zurückschwenken der Bandfördereinrichtung verhindert wird. Ist der Fremdkörper beispielsweise nicht Ausgeworfen, beziehungsweise erfasst der weitere Sensor den Fremdkörper nicht beim Auswerfen, kann eine nachgeschaltete Bandfördereinrichtung in Auswerfrichtung geschwenkt werden, um sicherzustellen das der Fremdkörper nicht zur landwirtschaftlichen Maschine befördert wird. Alternativ oder optional ergänzend kann die Fördergeschwindigkeit verringert oder die Bandfördereinrichtungen angehalten werden. Zudem ist vorteilhaft, dass der ausgeworfene Materialabschnitt möglichst klein gehalten wird, da unmittelbar nach dem detektieren des Auswurfes die Bandfördereinrichtung zurückgeschwenkt wird, um einen möglichst geringen Ausschuss an Material beim Auswurf des Fremdkörpers erhalten.

Alternativ ist vorgesehen, dass die Sortiereinrichtung zum Ansteuern des Aus- und Einschwenkens der Bandfördereinrichtung in Abhängigkeit einer ersten und einer zweiten Zeitspanne nach dem Detektieren eines Fremdkörpers im Materialstrom ausgebildet ist. Vorzugsweise ist die erste Zeitspanne, welche mit dem Detektieren des Fremdkörpers in der Förderbahn beginnt, abhängig der Fördergeschwindigkeit mit welcher die Bandfördereinrichtung den Materialstrom befördert. Beispielsweise ist die erste Zeitspanne in Abhängigkeit der Fördergeschwindigkeit derart eingestellt, dass die Bandfördereinrichtung rechtzeitig in die Auswurfrichtung zum Auswerfen des Fremdkörpers schwenkt, bevor der Fremdkörper weiter in Richtung der Förderrichtung zur landwirtschaftlichen Maschine gefördert wird. Die zweite Zeitspanne, welche vorzugsweise mit dem Ausschwenken der Bandfördereinrichtung beginnt, ist vorzugsweise wiederum abhängig der Fördergeschwindigkeit, wobei die zweite Zeitspanne derart eingestellt ist, dass der Auswurf des Materialstreifend mit dem Fremdkörper sichergestellt ist, wobei nach Ablauf der zweiten Zeitspanne die Bandfördereinrichtung zurück in die Förderbahn geschwenkt wird und/oder in der Förderposition angeordnet ist.

Gegenstand der Erfindung ist eine landwirtschaftliche Maschine mit einer Fördervorrichtung zur Förderung eines Materialstroms eines Materials, wobei die Fördervorrichtung, wie zuvor beschreiben, ausgebildet ist.

Die landwirtschaftliche Maschine ist vorzugsweise als eine Ballenpresse, im Speziellen als eine Rundballenpresse oder als eine Großpackenpresse, zur Erzeugung von Ballen oder Packen aus einem Material, z.B. Heu, Stroh oder Grassilage, ausgebildet. Die landwirtschaftliche Maschine ist vorzugweise als eine motorisierte Maschine oder als eine unmotorisierte Maschine zum Ziehen durch eine Arbeitsmaschine, z.B. Traktor, ausgebildet. Die landwirtschaftliche Maschine weist vorzugsweise eine Verarbeitungsvorrichtung zur Herstellung der Ballen oder Packen auf.

Beispielsweise ist die landwirtschaftliche Maschine als eine Rundballenpresse ausgebildete, wobei die Verarbeitungsvorrichtung eine Verdichtungseinrichtung und eine Wickeleinrichtung aufweist. Die Verdichtungseinrichtung ist mit der Wickeleinrichtung zum Verdichten des Materials fördertechnisch verbunden, wobei das verdichtete Material von der Verdichtungseinrichtung der Wickeleinrichtung zum Wickeln von Ballen, insbesondere Rundballen, zuführbar ist.

Alternativ ist die landwirtschaftliche Maschine als Großpackenpresse ausgebildet, wobei die Verarbeitungsvorrichtung eine Presskammer und einen Presskolben aufweist, wobei das Material der Presskammer zuführbar ist, wobei der Presskolben innerhalb der Presskammer zum Pressen des Materials zu Packen, insbesondere quaderförmige Packen, beweglich ausgeleidet ist.

Die landwirtschaftliche Maschine weist die Fördervorrichtung auf, wobei die Fördervorrichtung der Verarbeitungsvorrichtung der landwirtschaftlichen Maschine fördertechnisch vorgeschaltet ist. Die Fördervorrichtung ist geeignet, das Material, z.B. Heu, Stroh oder Grassilage, der Verarbeitungsvorrichtung über die Förderbahn zuzuführen. Beispielsweise ist die Fördervorrichtung in Fahrt- und/oder Zugrichtung landwirtschaftlichen Maschine vor der Verarbeitungsvorrichtung angeordnet. Die landwirtschaftliche Maschine weist vorzugsweise eine Materialaufnahmevorrichtung zum Aufnehmen des Materials von einer landwirtschaftlichen Fläche auf. Die Materialaufnahmevorrichtung ist vorzugsweise als eine rotierende Trommel zum Aufsammeln von Heu, Stroh, Gras oder dergleichen ausgebildet. Die Materialaufnahmevorrichtung nimmt das Material, welches beispielsweise verteilt auf der landwirtschaftlichen Fläche liegt, auf, wobei das Material von der Materialaufnahmevorrichtung auf die Förderbahn gelegt wird und/oder dieser zuführbar ist.

Die Fördervorrichtung weist mehrere zusammenhängende Förderbahnen auf, wobei die Förderbahnen parallel nebeneinander angeordnet sind. Das Material ist von der Fördervorrichtung zu der Verarbeitungsvorrichtung beförderbar, wobei die Fördervorrichtung zum Auswurf von Fremdkörpern zwischen diesen angeordnet ist. Beispielsweise sammelt die Materialaufnahmevorrichtung mit dem Material einen Fremdkörper auf, wobei das Material mit dem Fremdkörper über die Fördervorrichtung befördert wird, wobei die Fördervorrichtung die Sortiereinrichtung zum Detektieren des Fremdkörpers aufweist. Die Sortiereinrichtung ist ausgebildet, ein Steuersignal beim Detektieren des Fremdkörpers innerhalb der Förderbahn zu erzeugen, insbesondere beim Detektieren durch die Sensoren, wobei das Steuersignal an eine der mehreren Bandfördereinrichtungen zum Schwenken aus der Förderbahn gesendet wird. Die Bandfördereinrichtung ist vorzugsweise als Doppelgurtförderer mit dem ersten und dem zweiten Förderband ausgebildet, wobei das Material zwischen den beiden übereinander angeordneten Förderbändern in einem Förderkorridor beförderbar ist. Nach dem Detektieren der Sortiereinrichtung schwenkt die entspreche Bandfördereinrichtung mit den beiden Förderbändern aus der Förderbahn, auf welcher sich der Fremdkörper befindet, aus, um den Fremdkörper auszuwerfen, wobei die Scheideeinrichtung, insbesondere die Schneideeinrichtung mit den mehreren rotierenden Schneidemesser, einen Materialabschnitt mit dem Fremdkörper aus dem Materialstrom austrennt.

Nach Auswurf des Fremdkörpers schwenkt die Bandfördereinrichtung zum Fördern des Materialstroms zurück in Förderrichtung in die Förderbahn ein, wobei das Material, insbesondere fremdkörperfrei, zur Verarbeitungsvorrichtung zur Herstellung der Ballen oder Packen befördert wird und/oder beförderbar ist. Vorzugsweise weist die landwirtschaftliche Maschine einen Auffangbehälter zum Auffangen des Fremdkörpers aus, sodass der Fremdkörper beispielsweise nicht wieder von der Materialaufnahmevorrichtung auf der landwirtschaftlichen Fläche erneut aufgesammelt wird. Vorteilhaft ist, dass die mehreren Bandfördereinrichtungen lediglich Materialabschnitte und/oder kleine Segmente des Materialstroms auswerfen, sodass eine landwirtschaftliche Maschine geschaffen ist, welche besonders wenig Ausschuss produziert. Zudem ist vorteilhaft, dass das Auswerfen und/oder Aussortieren der Fremdkörper bei einer hohen Fördergeschwindigkeit erfolgen kann, da die mehreren Bandfördereinrichtungen auf den mehreren Förderbahnen durch einen geringen Ausschwenkweg schnell und punktgenau bewegt werden können, sodass die landwirtschaftliche Maschine zeit- und kostensparend betreiben werden kann.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: eine perspektivische Darstellung einer landwirtschaftlichen Maschine mit einer Fördervorrichtung zum Fördern von eines Materialstroms eines Materials;
- Figur 2: eine schematische Darstellung einer Fördervorrichtung mit mehreren Bandfördereinrichtung zum Fördern des Materialstroms als ein bevorzugtes Ausführungsbeispiel;
- Figur 3: eine stark schematisierte Seitenansicht der Fördervorrichtung aus Figur 2 zum Fördern des Materialstroms in eine Förderrichtung;
- Figur 4: eine weitere stark schematisierte Seitenansicht der Fördervorrichtung aus Figur 3 zum Fördern des Materialstroms in eine Auswurfrichtung;
- Figur 5: eine stark schematisierte Seitenansicht der Fördervorrichtung wie in Figur 3 und 4 mit einer Schneideeinrichtung zum Austrennen von Material aus dem Materialstrom;
- Figur 6: eine schematisierte Darstellung des Materialstrom mit ausgetrennten Materialabschnitten.

Einander entsprechende oder gleiche Teile sind in den Figuren jeweils mit den gleichen Bezugszeichen versehen.

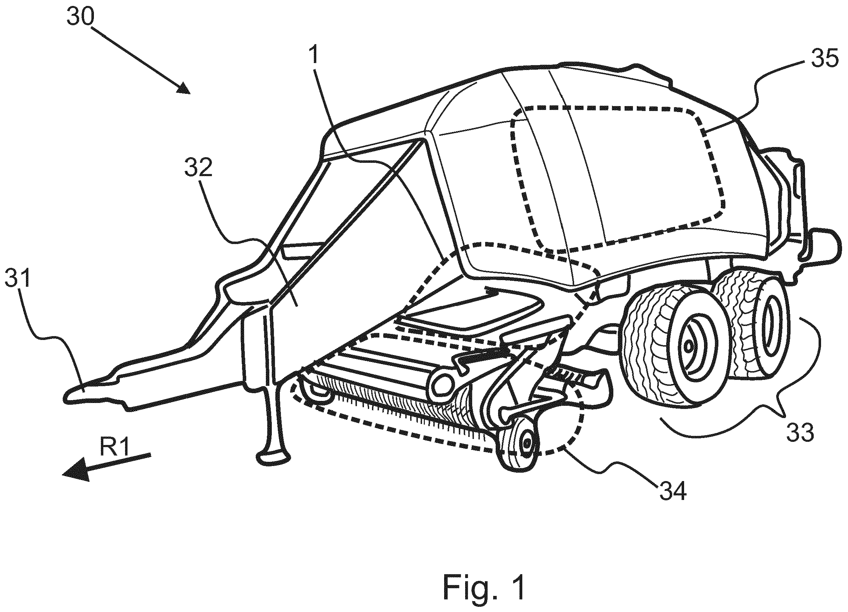

In der Figur 1 ist eine landwirtschaftliche Maschine 30 in einer perspektiven Darstellung als ein erstes Ausführungsbeispiel gezeigt. Die landwirtschaftliche Maschine 30 ist als eine Großpackenpresse zum Verarbeiten eines Materials zu Packen, insbesondere von Stroh, Heu oder Grassilage zu quaderförmigen Packen, ausgebildet. Alternativ ist die landwirtschaftliche Maschine 30 als Rundballenpresse zur Erzeugung von Rundballen aus Stroh, Heu oder dergleichen ausgebildet. Die landwirtschaftliche Maschine 30 ist zum Anhängen an eine landwirtschaftliche Arbeitsmaschine, z.B. einen Traktor (nicht gezeigt), mit einer Anhängerkupplungseinrichtung 31 ausgebildet, wobei die landwirtschaftliche Maschine 30 beispielsweise mit dem Traktor zum Antreiben über eine landwirtschaftliche Fläche, z.B. einer Acker oder einer Weidefläche, zur Aufnahme und Verarbeitung des Materials zu den Packen oder Ballen antriebstechnisch verbunden ist. Alternativ weist die landwirtschaftliche Maschine 30 eine Antriebseinheit zum Bewegen über die landwirtschaftliche Fläche auf. Die landwirtschaftliche Maschine 30 weist einen Fahrzeugrahmen 32 auf, welcher mit der in Fahrtrichtung R1 ausgebildete Anhängerkupplungseinrichtung 31 verbunden ist und/oder diese aufweist. Der Fahrzeugrahmen 32 erstreckt sich über die gesamte Länge der landwirtschaftlichen Maschine 30, wobei der Fahrzeugrahmen 32 auf einer Achseneinrichtung 33 der landwirtschaftlichen Maschine 30 aufgesetzt ist.

Die landwirtschaftliche Maschine 30 weist eine Materialaufnahmevorrichtung 34 zur Aufnahme des Materials von der landwirtschaftlichen Fläche auf. Die Materialaufnahmevorrichtung 34 ist in der Figur 1 durch eine gestrichelte Linie gezeigt, wobei lediglich die äußeren Bauteile der Materialaufnahmevorrichtung 34 dargestellt sind. Die Materialaufnahmevorrichtung 34 ist unterhalb des Fahrzeugrahmens 32 in Fahrtrichtung R1 angeordnet, wobei die Materialaufnahmevorrichtung 34 eine sog. Pickup-Trommel zur Aufnahme des losen Materials von der landwirtschaftlichen Fläche aufweist. Die Pickup-Trommel ist rotierbar ausgebildet, wobei diese senkrecht zur Fahrtrichtung R1 nahezu über die gesamte Breite der landwirtschaftlichen Maschine 30 ausgebildet ist. Beispielsweise weist die Pickup-Trommel mehrere Stacheln auf der Trommel auf, welche in radialer Richtung in Bezug auf eine Rotationsachse der Trommel ausgebildet sind, wobei die Stachel beispielsweise das lose Material von der landwirtschaftlichen Fläche in die landwirtschaftliche Maschine 30 zur Weiterverarbeitung transportiert. Die landwirtschaftliche Maschine 30 weist eine Verarbeitungsvorrichtung 35 zur Herstellung der Packen oder Ballen auf. Die Verarbeitungsvorrichtung 35 ist in der Figur 1 lediglich als ein gestrichelter Bereich dargestellt, wobei die Verarbeitungsvorrichtung 35 nicht sichtbar im Inneren der landwirtschaftlichen Maschine 30 ausgebildet ist. Die Verarbeitungsvorrichtung 35 weist beispielsweise eine Presskammer und einen Presskolben auf, wobei das Material der Presskammer zuführbar ist, wobei der Presskolben innerhalb der Presskammer zum Pressen des Materials zu Packen, insbesondere quaderförmige Packen, beweglich ausgeleidet ist. Ist ein Packen aus Material durch die Verarbeitungsvorrichtung 35 hergestellt, ist der Packen durch die Verarbeitungsvorrichtung 35 entgegen der Fahrtrichtung R1 an einem hinteren Ende der landwirtschaftlichen Maschine 30 abtransportierbar. Beispielsweise fällt der Packen nach Herstellung zurück auf die landwirtschaftliche Fläche oder ist einer weiteren landwirtschaftlichen Arbeitsmaschine unmittelbar zuführbar.

Die landwirtschaftliche Maschine 30 weist eine Fördervorrichtung 1 zum Fördern eines Materialstroms aus dem Material auf. Die Fördervorrichtung 1 ist in der Figur 1 lediglich durch einen gestrichelten Bereich angedeutet, wobei die Fördervorrichtung 1 gemäß dem Ausführungsbeispiel vollkommen in der landwirtschaftlichen Maschine 30 aufgenommen ist. Die Fördervorrichtung 1 verbindet die Materialaufnahmevorrichtung 34 mit der Verarbeitungsvorrichtung 35 fördertechnisch miteinander, sodass das durch die Materialaufnahmevorrichtung 34 aufgenommene Material durch die Fördervorrichtung 1 zu der Verarbeitungseinrichtung 35 befördert werden kann und/oder beförderbar ist. Die Fördervorrichtung 1 ist zwischen der Materialaufnahmevorrichtung 34 und der Verarbeitungsvorrichtung 35 angeordnet, wobei die Fördervorrichtung 1 ausgebildet ist, das Materials über Steigung und/oder über einen Höhenversatz zwischen Materialaufnahmevorrichtung 34 und der Verarbeitungsvorrichtung 35 zu befördern.

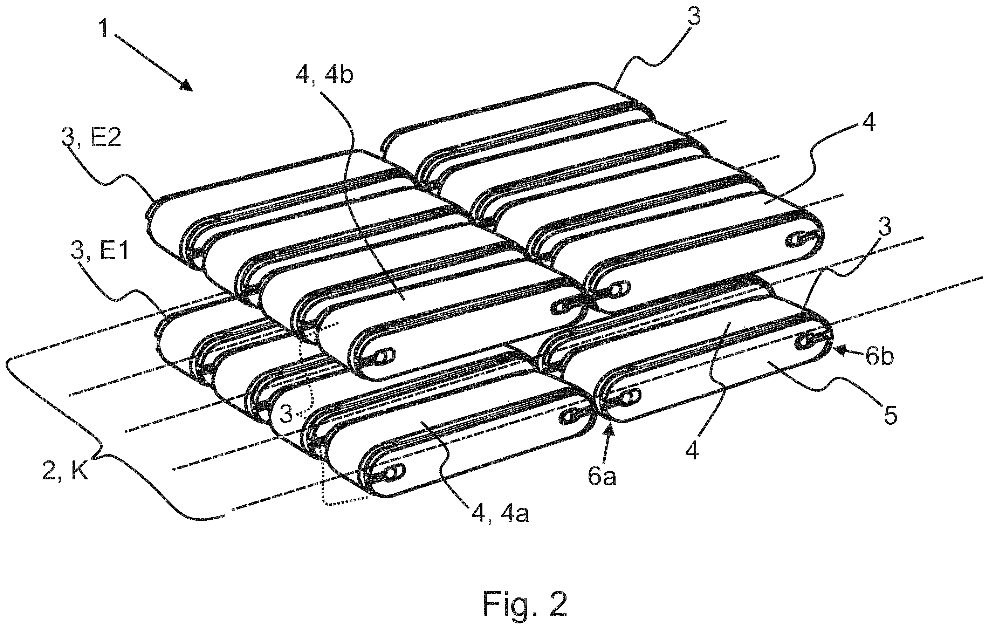

In der Figur 2 ist die Fördervorrichtung 1 vereinfacht dargestellt, wobei die Fördervorrichtung 1 durch mehrere Bandfördereinrichtungen 3 gebildet ist. Zur vereinfachten Darstellung wurde in der Figur 2 auf eine Umgebungskonstruktion verzichtet. Die Fördervorrichtung 1 weist mehrere Förderbahnen 2 auf, wobei die mehreren Förderbahnen 2 parallel zueinander angeordnet sind, wobei die mehreren Förderbahnen 2 zusammenhängend zum gemeinsamen Fördern des Materials ausgebildet sind. In der Figur 2 sind vier Förderbahnen 2 gezeigt, wobei grundsätzlich beliebig viele Förderbahnen, bevorzugt jedoch mindestens zwei Förderbahnen 2, ausgebildet sein können. Die Förderbahnen 2 verlaufen beispielsweise von der Materialaufnahmevorrichtung 34 zur Verarbeitungsvorrichtung 35 der landwirtschaftlichen Maschine 30. Beispielsweise weist die Fördervorrichtung 1 einen seitlichen Begrenzungsabschnitt (nicht gezeigt) auf, um die äußeren Förderbahnen 2 zu begrenzen. Die Begrenzungsabschnitte sind geeignet, den Materialstrom zu führen und/oder diesen beim Befördern zu komprimieren. Beispielsweise ist es dankbar, dass mehreren Förderbahnen 2 zusammenlaufend ausgebildet sind, sodass der Materialstrom verdichtet wird, wobei die seitlichen Begrenzungsabschnitte trichterförmig mit den zusammenlaufenden Förderbahnen 2 ausgebildet sind.

Die mehreren Bandfördereinrichtungen 3 sind in mehreren Reihen innerhalb der Förderbahnen 2 angeordnet. Gemäß dem Ausführungsbeispiel sind die Bandfördereinrichtungen 3 als Doppelgurtförderer ausgebildet, wobei diese übereinander in einer ersten und einer zweiten Ebenen E1, E2 angeordnet sind, wobei zwischen den beiden Ebenen E1, E2 ein Förderkorridor gebildet ist. Der Förderkorridor K ist zusammenhängend ausgebildet, sodass die mehreren Bandfördereinrichtung den Materialstrom gemeinsam entlang des Förderkorridors K befördern. Grundsätzlich kann die Fördervorrichtung 1 lediglich die erste Ebene E1 an Bandfördereinrichtungen 3 aufweisen. Die Bandfördereinrichtungen 3 sind allgemein als Stetigförderer ausgebildet, wobei die Bandfördereinrichtungen 3 ein endloses Förderband 4 aufweisen. Das Förderband 4 ist beispielsweise ein gummiertes Gurtband. Alternativ oder optional ergänzend weist das Förderband 4 eine Profilstruktur oder Querlamellen auf, um den Materialstrom anzutreiben. Die Bandfördereinrichtungen 3 weisen einen Tragrahmen 5 und eine erste und eine zweite Tragrollen 6a, 6b auf, wobei die Tragrollen 6a, 6b an einem ersten und an einem zweiten Ende des Tragrahmens 5 angeordnet sind, wobei das Förderband 4 durch die Tragrollen 6a, 6b umlenkend an dem Tragrahmen 5 aufgenommen sind. Beispielsweise weist die Bandfördereinrichtung 3 eine Antriebseinheit zum Antreiben des Förderbandes 4 auf, wobei die Antriebseinheit mit einer oder beiden Tragrollen 6a, 6b antriebstechnisch verbunden ist. Alternativ oder optional ergänzend können jeweils eine Bandfördereinrichtung 3 der ersten Ebene E1 mit einer Bandfördereinrichtung 3 der zweiten Ebene E2 gemeinsam ausgebildet sein (Doppelgurtförderer). Folglich weis die Bandfördereinrichtung 3 ein erstes und ein zweites Förderband 4a, 4b auf.

Während in der Figur 2 auch im Bereich der Zuführung mehrere Bandfördereinrichtungen 3 nebeneinander gezeigt sind, ist es auch möglich, dass bei der Zuführung und/der Weiterführung hinter den abklappbaren Bandfördereinrichtungen 3 und/oder dem Auswurfabschnitt 11 eine gemeinsame Bandfördereinrichtung 3 oder zumindest breitere Bandfördereinrichtungen 3 eingesetzt werden. Diese können sich beispielsweise über die gesamte Förderbreite erstrecken.

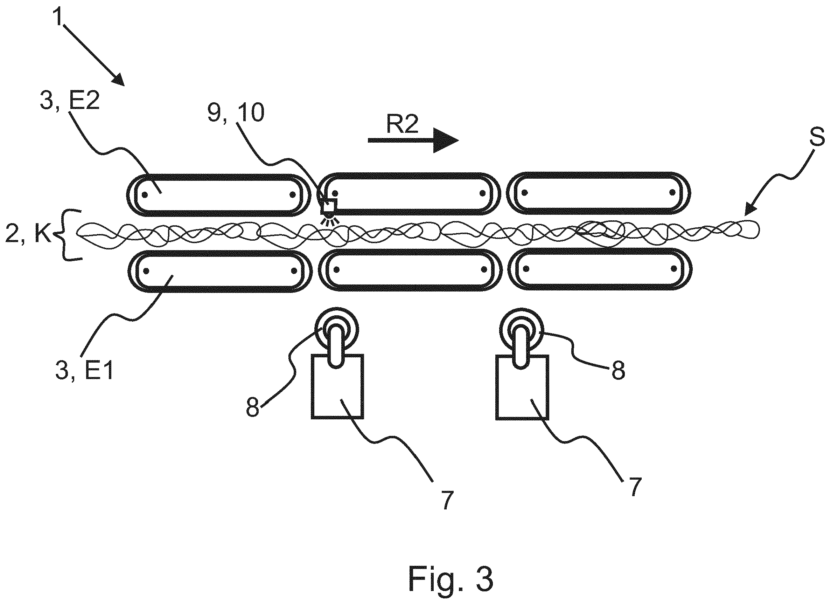

In der Figur 3 ist die Fördervorrichtung 1 in einer schematischen Seitenansicht gezeigt. Die Fördervorrichtung 1 weist, wie bereits in Figur 2 gezeigt, zwei Ebenen E1, E2 an Bandfördereinrichtungen 3 auf, welche gemeinsam den Materialstrom S entlang der Förderbahn 2 befördern. In der Figur 3 sind die Bandfördereinrichtungen 3 vereinfacht dargestellt, wobei jeweils drei Bandfördereinrichtungen 3 auf jeder Ebene E1, E2 hintereinander angeordnet sind. Der Materialstrom S ist in eine Förderrichtung R2 beförderbar, wobei die Förderrichtung R2 beispielsweise von der Materialaufnahmevorrichtung 34 zu der Verarbeitungsvorrichtung 35 ausgebildet ist.

Ferner weist die Fördervorrichtung 1 eine Schneideeinrichtung 7 zum Austrennen von Material aus dem Materialstrom S auf. Die Schneideeinrichtung 7 ist, wie bereits die die Bandfördereinrichtungen 3, in der Figur 3 stark schematisiert dargestellt. Die Schneideeinrichtung 7 ist außerhalb der Förderbahn 2 angeordnet, wobei gemäß dem Ausführungsbeispiel mehrere Schneideeinrichtungen 7 ausgebildet sind. Die Scheideeinrichtung 7 weist mindestens ein Schneidemesser 8 zum Schneiden des Materialstroms S auf. Die Schneidemesser 8 sind beispielsweise als Rollenschneidemesser ausgebildet, wobei die Schneidemesser rotierbar an der Schneideeinrichtung 7 ausgebildet sind, wobei die Schneideinrichtung 7 beispielsweise einen elektrischen oder mechanischen Antrieb aufweist, wobei der Antrieb zum Antreiben der Scheidemesser ausgebildet ist. In der Figur 3 ist gezeigt, wie der Materialstrom S ungeschnitten in Förderrichtung R2 befördert wird. Die Fördervorrichtung 1 weist eine Sortiereinrichtung 9 mit mindestens einem Sensor 10 auf. Die Sortiereinrichtung 9 ist lediglich schematisch dargestellt, wobei der Sensor 10 ausgebildet ist, einen Fremdkörper F in dem Materialstrom S zu detektieren. Beispielsweise ist der Sensor 10 als ein induktiver Sensor ausgebildet, wobei der Fremdkörper F, z.B. ein Metallsplitter, durch die Materialaufnahmevorrichtung 34 in die Fördervorrichtung 1 transportiert wird, wobei die Sortiereinrichtung 9 ausgebildet ist, denn Fremdkörper F zu erkennen, sodass die Förderrichtung R2 in eine Auswerfrichtung R3 geändert werden kann.

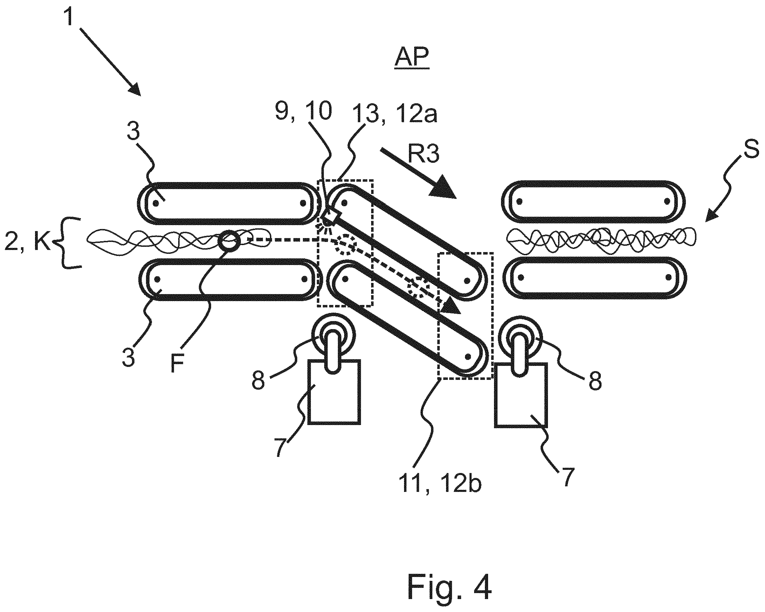

Ferner ist vorgesehen, dass die Bandfördereinrichtungen 3 schwenkbar ausgebildet sind, sodass der Materialstrom S von der Förderrichtung R2 in die Auswerfposition R3 umgelenkt werden kann und/oder umlenkbar ist. In der Figur 4 ist die Fördervorrichtung 1 mit geschwenkten Bandfördereinrichtungen 3 gezeigt, wobei ein Paar an Bandfördereinrichtungen 3 geschwenkt angeordnet sind. Die beiden Bandfördereinrichtungen 3, jeweils eine Bandfördereinrichtung 3 auf der ersten und auf der zweiten Ebene E1, E2, sind mit einem Auswurfabschnitt 11 außerhalb der Förderbahn 2 angeordnet. Der Auswerfabschnitt 11 ist beispielsweise als ein schwenkbares Ende und/oder als ein zweiter Umlenkstationsabschnitt 12b der Bandfördereinrichtung 3 ausgebildet. Beispielsweise weist die Bandfördereinrichtung 3 einen ersten und einen zweiten Umlenkstationsabschnitt 12a, 12b auf, wobei die Umlenkstationsabschnitte 12a, 12b zum Umlenken der Förderbänder 4 ausgebildet sind. Zumindest zwei Bandfördereinrichtungen 3 sind gemäß dem Ausführungsbeispiel in Figur 4 in einer Auswurfposition AP angeordnet. In der Auswurfposition AP ist der Auswurfabschnitt 11 unterhalb der Förderbahn 2 angeordnet. Durch die beidseitige Führung der beiden Bandfördereinrichtungen 3 in der Auswurfposition AP ist die Auswerfrichtung R3 definiert. Die Auswerfrichtung R3 ist mindestens um 35°, im Speziellen um mindesten 45°, versetzt zur Förderrichtung R2 ausgebildet, sodass der Materialstrom S in Richtung der Schneideeinrichtung 7 umgelenkt ist. Grundsätzlich kann die Schneideeinrichtung 7 an dem Auswurfabschnitt 11 angeordnet sein, sodass diese mit in die Auswurfposition AP verschwenkbar ist, wobei die Schneideeinrichtung 7 lediglich zum Austrennen eines Materialstreifen T beim Fördern in die Auswurfrichtung R3 ausgebildet ist. Beispielsweise sind die Schneidemesser 8 durch eine Hebeeinrichtung ausfahrbar ausgebildet, sodass die Schneidemesser 8 in der Auswurfposition AP seitlich der Bandfördereinrichtung 3 in den Materialstrom S hineinbewegt werden können.

In der Figur 4 weist der Materialstrom S einen Fremdkörper F, z.B. eine Blechdose, auf, welcher beispielsweise mit dem Materialstrom S zusammen in der Förderbahn 2 befördert wird. Die Fördervorrichtung 1 weist die Sortiereinrichtung 9 mit dem mindestens einen Sensor 10 auf, welcher an einem Schwenkabschnitt 13 der Bandfördereinrichtung 3 angeordnet ist. Der Schwenkabschnitt 13 ist beispielsweise als der erste Umlenkstationsabschnitt 12a ausgebildet, wobei die beiden Enden der Bandfördereinrichtung 3 um jeweils eine Schwenkachse zwischen einer Förderposition FP und der Auswerfposition AP schwenkbar sind.

Passiert der Fremdkörper F einen Überwachungsbereich eines Sensors 10, so ist die Sortiereinrichtung 9 ausgebildet, den Fremdkörper F durch Schwenken der jeweiligen Bandfördereinrichtungen 3 in die Auswerfposition AP aus der Fördervorrichtung 1 auszuwerfen. Beispielsweise detektiert der induktive Sensor den Fremdkörper F, wobei die Sortiereinrichtung 9 ein Steuersignal an die demensprechende Bandfördereinrichtungen 3 zum paarweisen Ausschwenken in die Auswerfposition AP sendet, sodass der Materialstrom S mit dem Fremdkörper F umgelenkt wird. Dadurch wird verhindert, dass Fremdkörper F in Förderrichtung R2 beispielsweise zur Verarbeitungsvorrichtung 35 der landwirtschaftlichen Maschine 30 befördert wird. Dies schützt besonders Tiere die mit dem Material gefüttert werden davor, dass diese Verletzungen durch die Fremdkörper F erleiden.

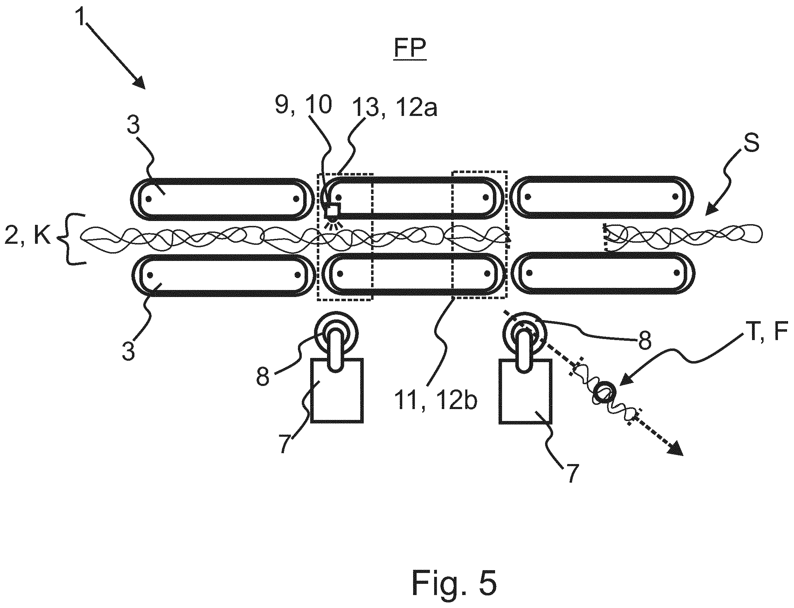

In der Figur 4 ist der Weg den der Fremdkörper F in Richtung des Auswerfabschnitts 11 zurücklegt als gestrichelte Linie angedeutet, wobei die Schneideeinrichtung 7 am Ende des Auswurfsabschnitts 11 einen Materialabschnitt T mit dem Fremdkörper F in Auswerfrichtung R3 aus dem Materialstrom S schneidet. Dazu ist in der Figur 5 der Materialabschnitt T in einem ausgeworfenen Zustand gezeigt. Die Bandfördereinrichtungen 3 sind in der Förderposition FP angeordnet, wobei in der Förderposition FP der Auswerfabschnitt 11 innerhalb der Förderbahn 2 angeordnet ist. Beispielsweise ist die Sortiereinrichtung 9 ausgebildet, nach Auswurf des Materialabschnitts T mit dem Fremdkörper F ein weiteres Steuersignal an die Bandfördereinrichtungen 3 zu senden, wobei die Bandfördereinrichtungen 3 zurück in die Förderposition FP schwenken, sodass der Materialstrom S in die Förderbahn 2 eingeleitet wird, und/oder einleitbar ist. Beim Zurückschwenken reist die Bandfördereinrichtung 3 beispielsweise den Materialabschnitt T quer zur Auswerfrichtung R3 ab. Alternativ weist die Schneideeinrichtung 7 ein Querschneidemesser auf, wobei das Querschneidemesse beispielsweise an der jeweils folgenden Bandfördereinrichtung 3 unterhalb oder angrenzend zur ersten Umlenkstationsabschnitt 12a angeordnet ist. Der Materialabschnitt T mit dem Fremdkörper F fällt nach dem Austrennen durch die Schneideeinrichtung 7 beispielsweise in einen Ausfangbehälter der landwirtschaftlichen Maschine 30, sodass dieser entsorgbar und nicht erneut auf der landwirtschaftlichen Fläche aufgenommen werden kann.

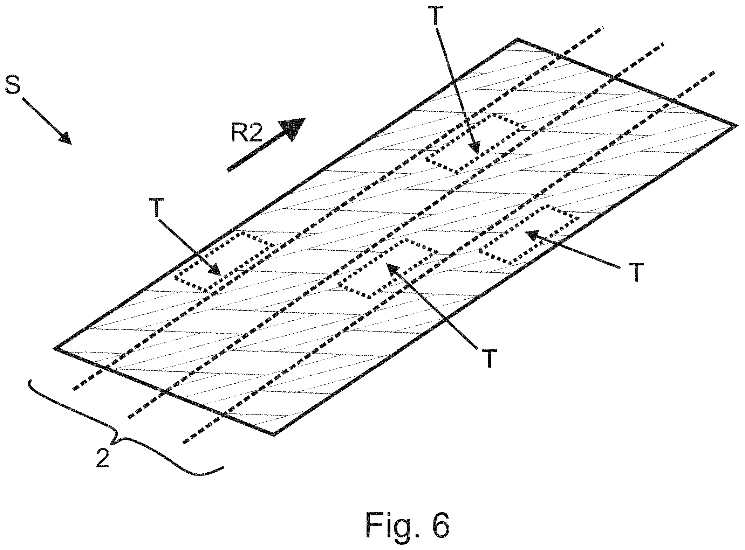

In der Figur 6 ist der Materialstrom S stark schematisiert dargestellt, wobei aus dem Materialstrom S mehrere Materialabschnitt T ausgetrennt sind. Die Förderbahnen 2 sind durch mehrere gestrichelten Linien angedeutet, wobei die ausgenommen Materialabschnitte T im Wesentlichen die Breite einer Förderbahn 2 aufweisen. Die Bandfördereinrichtungen 3 sind unabhängig und einzeln voneinander zwischen der Förderposition FP und der Auswurfposition AP schwenkbar ausgebildet. Dadurch wird lediglich ein, in Bezug auf die gesamte Breite des Materialstroms S, "kleiner" Materialabschnitt T beim Aussortieren des Fremdkörpers F ausgesondert.

### Bezugszeichenliste

- 1: Fördervorrichtung
- 2: Förderbahn
- 3: Bandfördereinrichtung
- 4: Förderband
- 4a: erstes Förderband
- 4b: zweites Förderband
- 5: Trägerrahmen
- 6a, b: Trägerrolle
- 7: Schneideeinrichtung
- 8: Schneidemesser
- 9: Sortiereinrichtung
- 10: Sensor
- 11: Auswurfabschnitt
- 12a: erste Umlenkstationsabschnitt
- 12b: zweiter Umlenkstationsabschnitt
- 13: Schwenkabschnitt

- 30: ladwirtschaftliche Maschine
- 31: Anhängerkupplungseinrichtung
- 32: Fahrzeugrahmen
- 33: Achseneinrichtung
- 34: Materialaufnahmevorrichtung
- 35: Verarbeitungsvorrichtung

- E1: erste Ebene
- E2: zweite Ebene
- K: Förderkorridor

- F: Fremdkörper
- S: Materialstrom
- T: Materialabschnitt

- FP: Förderposition
- AP: Auswurfposition

- R1: Fahrrichtung
- R2: Förderrichtung
- R3: Auswurfrichtung

## Patentansprüche

1. Landwirtschaftliche Maschine (30) mit einer Fördervorrichtung (1) zur Förderung eines Materialstroms (S) eines Materials,
wobei die Fördervorrichtung (1) mindestens eine Förderbahn (2) zur Beförderung des Materialstroms (S) aufweist, wobei die Förderbahn (2) eine Förderrichtung (R2) des Materialstroms (S) definiert,
wobei die Fördervorrichtung (1) mindestens eine Bandfördereinrichtung (3) zum Fördern des Materialstroms (S) aufweist, wobei die Bandfördereinrichtung (3) innerhalb der Förderbahn (2) angeordnet ist,
**dadurch gekennzeichnet, dass**
zumindest ein Auswurfabschnitt (11) der Bandfördereinrichtung (3) aus der Förderbahn (2) schwenkbar ausgebildet ist, um den Materialstrom (S) von der Förderrichtung (R2) in eine Auswerfrichtung (R3) umzulenken,
und, dass
die Fördervorrichtung (1) mindestens eine Schneideeinrichtung (7) aufweist, um den Materialstrom (S) beim Fördern in die Auswerfrichtung (R3) von dem in Förderrichtung (R2) geförderten Materialstrom (S) zu trennen.

2. Landwirtschaftliche Maschine (30) nach Anspruch 1 **dadurch gekennzeichnet, dass** die Schneideeinrichtung (7) an der Bandfördereinrichtung (3) oder benachbart zur Bandfördereinrichtung (3) seitens des Auswurfabschnitts (11) zum Austrennen des Materialstroms (S) angeordnet ist.

3. Landwirtschaftliche Maschine (30) nach Anspruch 1 oder 2, **dadurch gekennzeichnet, dass** der Auswurfabschnitt (11) zwischen einer Förderposition (FP) und einer Auswerfposition (AP) schwenkbar ist, wobei in der Förderposition (FP) die Bandfördereinrichtung (3) den Materialstrom (S) in Förderrichtung (R2) befördert, wobei in der Auswerfposition (AP) die Bandfördereinrichtung (3) den Materialstrom (S) in Auswerfrichtung (R3) befördert, wobei die Schneideeinrichtung (7) in der Auswerfposition (AP) den Materialstrom (S) trennt, um zumindest einen Materialabschnitt (T) des Materialstroms (S) zum Auswurf aus der Fördervorrichtung (1) heraus zu trennen.

4. Landwirtschaftliche Maschine (30) nach Anspruch 3, **dadurch gekennzeichnet, dass** die Schneideeinrichtung (7) den Materialstrom (S) in der Auswerfposition (AP) des Auswurfabschnitts (11) in Auswerfrichtung (R3) trennt, wobei beim Zurückschwenken des Auswurfabschnitts (11) in die Förderposition (FP) die Schneideeinrichtung (7) den Materialstrom (S) quer zur Auswerfrichtung (R3) trennt.

5. Landwirtschaftliche Maschine (30) nach einem der vorhergehenden Ansprüche, **dadurch gekennzeichnet, dass** die Fördervorrichtung (1) mindestens zwei benachbarte Förderbahnen (2) zur gemeinsamen Beförderung des Materialstroms (S) aufweist, wobei die Fördervorrichtung (1) mindestens zwei Bandfördereinrichtungen (3) mit Auswurfabschnitten (11) aufweist, wobei jeweils mindestens eine der Bandfördereinrichtungen (3) in einer der Förderbahnen (1) zum gemeinsamen Befördern des Materialstroms (S) angeordnet ist.

6. Landwirtschaftliche Maschine (30) nach Anspruch 5, **dadurch gekennzeichnet, dass** die Auswurfabschnitte (11) einzeln schwenkbar ausgebildet sind, wobei die Schneideeinrichtung (7) zwischen den Bandfördereinrichtungen (3) zum Austrennen von einzelnen Materialabschnitten (T) des Materialstroms (S) aus der jeweiligen Förderbahn (2) ausgebildet ist.

7. Landwirtschaftliche Maschine (30) nach einem der vorhergehenden Ansprüche, **dadurch gekennzeichnet, dass** die Bandfördereinrichtung (3) ein erstes und ein zweites Förderband (4) zum Führen des Materialstroms (S) aufweist, wobei das erste und das zweite Förderband (4a, 4b) beabstandet zueinander angeordnet sind, sodass zwischen dem ersten und dem zweiten Förderband (4a, 4b) ein Förderkorridor (K) zur zweiseitigen Führung des Materialstroms (S) ausgebildet ist.

8. Landwirtschaftliche Maschine (30) nach Anspruch 7, **dadurch gekennzeichnet, dass** die Bandfördereinrichtung (3) einen ersten und einen zweiten Umlenkstationsabschnitt (12a, 12b) zum Umlenken des ersten und des zweiten Förderbandes (4a, 4b) aufweist, wobei der Auswurfabschnitt (11) mit dem zweiten Umlenkstationsabschnitt (12b) aus der Förderbahn (2) schwenkbar ausgebildet ist.

9. Landwirtschaftliche Maschine (30) nach einem der vorhergehenden Ansprüche, **dadurch gekennzeichnet, dass** die Fördervorrichtung (1) eine Sortiereinrichtung (9) zur Steuerung des Auswurfes von Materialabschnitten (T) des Materialstroms (S) in Auswerfrichtung (R3) aus der Fördervorrichtung (1) durch die Bandfördereinrichtung (3) aufweist.

10. Landwirtschaftliche Maschine (30) nach Anspruch 9, **dadurch gekennzeichnet, dass** die Sortiereinrichtung (9) mindestens einen Sensor (10) zum Detektieren von Fremdkörpern (F) in dem Materialstrom (S) aufweist, wobei der Sensor (10) innerhalb der Förderbahn (2) vor der Bandfördereinrichtung (3) und/oder an dem ersten Umlenkstationsabschnitt (12a) zum Abtasten des Materialstroms (S) angeordnet ist.

11. Landwirtschaftliche Maschine (30) nach Anspruch 10, **dadurch gekennzeichnet, dass** die Sortiereinrichtung (9) zum Ansteuern eines Ausschwenkens des Auswurfabschnitts (11) nach Detektion des Fremdkörpers (F) im Materialstrom (S) ausgebildet ist, wobei zumindest der Auswurfabschnitt (11) der Bandfördereinrichtung (3) außerhalb der Förderbahn (2) zum Fördern in Auswerfrichtung (R3) angeordnet ist, um den Materialabschnitt (T) mit dem Fremdkörper (F) aus der Fördervorrichtung (1) auszuwerfen.

12. Landwirtschaftliche Maschine (30) nach Anspruch 10 oder 11, **dadurch gekennzeichnet, dass** die Sortiereinrichtung (9) zum Ansteuern eines Einschwenkens des Auswurfabschnitts (11) nach Auswerfen des Materialabschnitts (T) mit dem Fremdkörper (F) ausgebildet ist, wobei die Bandfördereinrichtung (3) mit dem Auswerfabschnitt (11) innerhalb der Förderbahn (2) angeordnet ist, um den Materialstrom (S) zurück in Förderrichtung (R2) zu fördern.

13. Landwirtschaftliche Maschine (30) nach Anspruch 12, **dadurch gekennzeichnet, dass** die Sortiereinrichtung (9) zum Ansteuern des Einschwenkens des Auswurfabschnitts (11) nach Detektion des Fremdkörpers (F) beim Auswurf aus der Fördervorrichtung (1) ausgebildet ist, wobei die Sortiereinrichtung (9) mindestens einen weiteren Sensor aufweist, wobei der weitere Sensor an dem zweiten Umlenkstationsabschnitt (12b) und/oder dem Auswurfabschnitt (11) zur Detektion des Auswurfes des Fremdkörpers (F) angeordnet ist.

14. Landwirtschaftliche Maschine (30) nach einem der vorhergehenden Ansprüche, **dadurch gekennzeichnet, dass** die landwirtschaftliche Maschine (30) als eine Ballenpresse ausgebildet ist.

## Claims

1. An agricultural machine (30) comprising a conveying device (1) for conveying a material stream (S) of a material,
wherein the conveying device (1) comprises at least one conveying path (2) for conveying the material stream (S), the conveying path (2) defining a conveying direction (R2) of the material stream (S),
wherein the conveying device (1) comprises at least one belt conveying apparatus (3) for conveying the material stream (S), the belt conveying apparatus (3) being arranged within the conveying path (2),
**characterized in that**
at least one ejection portion (11) of the belt conveying apparatus (3) is designed to be pivotable out of the conveying path (2) in order to divert the material stream (S) from the conveying direction (R2) into an ejection direction (R3),
and **in that**
the conveying device (1) comprises at least one cutting apparatus (7) in order to separate the material stream (S) being conveyed in the ejection direction (R3) from the material stream (S) conveyed in the conveying direction (R2).

2. The agricultural machine (30) according to Claim 1, **characterized in that** the cutting apparatus (7) is arranged on the belt conveying apparatus (3) or adjacent to the belt conveying apparatus (3) on the side of the ejection portion (11) to separate out the material stream (S).

3. The agricultural machine (30) according to Claim 1 or 2, **characterized in that** the ejection portion (11) is pivotable between a conveying position (FP) and an ejection position (AP), the belt conveying apparatus (3) conveying the material stream (S) in the conveying direction (R2) in the conveying position (FP) and the belt conveying apparatus (3) conveying the material stream (S) in the ejection direction (R3) in the ejection position (AP), the cutting apparatus (7) separating the material stream (S) in the ejection position (AP) in order to separate out at least one material portion (T) of the material stream (S) for ejection from the conveying device (1).

4. The agricultural machine (30) according to Claim 3, **characterized in that** the cutting apparatus (7) separates the material stream (S) in the ejection position (AP) of the ejection portion (11) in the ejection direction (R3), the cutting apparatus (7) separating the material stream (S) transversely to the ejection direction (R3) when the ejection portion (11) pivots back into the conveying position (FP).

5. The agricultural machine (30) according to any of the preceding claims, **characterized in that** the conveying device (1) comprises at least two adjacent conveying paths (2) for jointly conveying the material stream (S), the conveying device (1) comprising at least two belt conveying apparatuses (3) comprising ejection portions (11), at least one of the belt conveying apparatuses (3) being arranged in one of the conveying paths (1) in each case for jointly conveying the material stream (S).

6. The agricultural machine (30) according to Claim 5, **characterized in that** the ejection portions (11) are designed to be individually pivotable, the cutting apparatus (7) being formed between the belt conveying apparatuses (3) to separate out individual material portions (T) of the material stream (S) from the conveying path (2) in question.

7. The agricultural machine (30) according to any of the preceding claims, **characterized in that** the belt conveying apparatus (3) comprises a first and a second conveyor belt (4) for guiding the material stream (S), the first and the second conveyor belt (4a, 4b) being arranged at a distance from one another, such that a conveying corridor (K) for bilateral guidance of the material stream (S) is formed between the first and the second conveyor belt (4a, 4b).

8. The agricultural machine (30) according to Claim 7, **characterized in that** the belt conveying apparatus (3) comprises a first and a second diverting station portion (12a, 12b) for diverting the first and the second conveyor belt (4a, 4b), the ejection portion (11) comprising the second diverting station portion (12b) being designed to be pivotable out of the conveying path (2).

9. The agricultural machine (30) according to any of the preceding claims, **characterized in that** the conveying device (1) comprises a sorting apparatus (9) for controlling the ejection of material portions (T) of the material stream (S) in the ejection direction (R3) from the conveying device (1) by means of the belt conveying apparatus (3).

10. The agricultural machine (30) according to Claim 9, **characterized in that** the sorting apparatus (9) comprises at least one sensor (10) for detecting foreign objects (F) in the material stream (S), the sensor (10) being arranged within the conveying path (2) upstream of the belt conveying apparatus (3) and/or on the first diverting station portion (12a) for scanning the material stream (S).

11. The agricultural machine (30) according to Claim 10, **characterized in that** the sorting apparatus (9) is designed to actuate the ejection portion (11) pivoting out once the foreign object (F) has been detected in the material stream (S), at least the ejection portion (11) of the belt conveying apparatus (3) being arranged outside the conveying path (2) for conveying in the ejection direction (R3), in order to eject the material portion (T) containing the foreign object (F) from the conveying device (1).

12. The agricultural machine (30) according to Claim 10 or 11, **characterized in that** the sorting apparatus (9) is designed to actuate the ejection portion (11) pivoting in once the material portion (T) containing the foreign object (F) has been ejected, the belt conveying apparatus (3) comprising the ejection portion (11) being arranged within the conveying path (2), in order to convey the material stream (S) back in the conveying direction (R2).

13. The agricultural machine (30) according to Claim 12, **characterized in that** the sorting apparatus (9) is designed to actuate the ejection portion (11) pivoting in once the foreign object (F) has been detected during ejection from the conveying device (1), the sorting apparatus (9) comprising at least one further sensor, the further sensor being arranged at the second diverting station portion (12b) and/or the ejection portion (11) to detect the ejection of the foreign object (F).

14. The agricultural machine (30) according to any of the preceding claims, **characterized in that** the agricultural machine (30) is designed as a baler.

## Revendications

1. Machine agricole (30) avec un dispositif de transport (1) pour le transport d'un flux de matériau (S) d'un matériau,
le dispositif de transport (1) présentant au moins un convoyeur (2) pour le transport du flux de matériau (S), le convoyeur (2) définissant une direction de transport (R2) du flux de matériau (S),
le dispositif de transport (1) présentant au moins un dispositif de convoyeur à bande (3) pour le transport du flux de matériau (S), le dispositif de convoyeur à bande (3) étant disposé à l'intérieur du convoyeur (2),
**caractérisée en ce qu'**
au moins une section d'éjection (11) du dispositif de convoyeur à bande (3) étant formée de façon basculante à partir du convoyeur (2) afin de dévier le flux de matériau (S) de la direction de transport (R2) dans une direction d'éjection (R3),
et **en ce que**
le dispositif de transport (1) présente au moins un dispositif de coupe (7) pour séparer le flux de matériau (S) lors du transport dans la direction d'éjection (R3) du flux de matériau (S) transporté dans la direction de transport (R2).

2. Machine agricole (30) selon la revendication 1, **caractérisée en ce que** le dispositif de coupe (7) est disposé sur le dispositif de convoyeur à bande (3) ou à proximité du dispositif de convoyeur à bande (3) du côté de la section d'éjection (11) pour séparer le flux de matériau (S).

3. Machine agricole (30) selon la revendication 1 ou 2, **caractérisée en ce que** la section d'éjection (11) peut basculer entre une position de transport (FP) et une position d'éjection (AP), le dispositif de convoyeur à bande (3) transportant le flux de matériau (S) dans la direction de transport (R2), en position de transport (FP), le dispositif de convoyeur à bande (3) transportant le flux de matériau (S) dans la direction d'éjection (R3), en position d'éjection (AP), le dispositif de coupe (7), dans la position d'éjection (AP), séparant le flux de matériau (S) pour séparer au moins une section de matériau (T) du flux de matériau (S) pour l'éjection hors du dispositif de transport (1).

4. Machine agricole (30) selon la revendication 3, **caractérisée en ce que** le dispositif de coupe (7) sépare le flux de matériau (S) en position d'éjection (AP) de la section d'éjection (11) dans la direction d'éjection (R3), le dispositif de coupe (7) séparant le flux de matériau (S) transversalement par rapport à la direction d'éjection (R3), lors du retour en position de transport (FP) par basculement de la section d'éjection (11).

5. Machine agricole (30) selon l'une quelconque des revendications précédentes, **caractérisée en ce que** le dispositif de transport (1) présente au moins deux convoyeurs (2) voisins pour le transport en commun du flux de matériau (S), le dispositif de transport (1) présentant au moins deux dispositifs de convoyeur à bande (3) avec des sections d'éjection (11), respectivement au moins un des dispositifs de convoyeur à bande (3) étant disposé dans l'un des convoyeurs (1) pour le transport en commun du flux de matériau (S).

6. Machine agricole (30) selon la revendication 5, **caractérisée en ce que** les sections d'éjection (11) sont formées pour pouvoir basculer de façon individuelle, le dispositif de coupe (7) étant formé entre les dispositifs de convoyeur à bande (3) pour la séparation de sections de matériau (T) individuelles du flux de matériau (S) du convoyeur respectif (2).

7. Machine agricole (30) selon l'une quelconque des revendications précédentes, **caractérisée en ce que** le dispositif de convoyeur à bande (3) présente une première et une deuxième bandes transporteuses (4) pour guider le flux de matériau (S), la première et la deuxième bandes transporteuses (4a, 4b) étant disposées à distance l'une de l'autre, de telle sorte qu'un corridor de transport (K) est formé entre la première et la deuxième bandes transporteuses (4a, 4b) pour le guidage sur deux côtés du flux de matériau (S).

8. Machine agricole (30) selon la revendication 7, **caractérisée en ce que** le dispositif de convoyeur à bande (3) présente une première et une deuxième sections de station de déviation (12a, 12b) pour la déviation de la première et de la deuxième bandes transporteuses (4a, 4b), la section d'éjection (11) étant formée de façon basculante, à partir du convoyeur (2), avec la deuxième section de station de déviation (12b).

9. Machine agricole (30) selon l'une quelconque des revendications précédentes, **caractérisée en ce que** le dispositif de transport (1) présente un dispositif de tri (9) pour la commande de l'éjection de sections de matériau (T) du flux de matériau (S) dans la direction d'éjection (R3) à partir du dispositif de transport (1) par le dispositif de convoyeur à bande (3).

10. Machine agricole (30) selon la revendication 9, **caractérisée en ce que** le dispositif de tri (9) présente au moins un capteur (10) pour détecter des corps étrangers (F) dans le flux de matériau (S), le capteur (10) étant disposé à l'intérieur du convoyeur (2) en amont du dispositif de convoyeur à bande (3) et/ou au niveau de la première section de station de déviation (12a) pour le balayage du flux de matériau (S).

11. Machine agricole (30) selon la revendication 10, **caractérisée en ce que** le dispositif de tri (9) est formé pour le pilotage d'un basculement vers l'extérieur de la section d'éjection (11) après la détection de l'objet étranger (F) dans le flux de matériau (S), au moins la section d'éjection (11) du dispositif de convoyeur à bande (3) étant disposée hors du convoyeur (2) pour le transport dans la direction d'éjection (R3), afin d'éjecter la section de matériau (T) avec l'objet étranger (F) hors du dispositif de transport (1).

12. Machine agricole (30) selon la revendication 10 ou 11, **caractérisée en ce que** le dispositif de tri (9) est formé pour le pilotage d'un basculement vers l'intérieur de la section d'éjection (11) après l'éjection de la section de matériau (T) avec le corps étranger (F), le dispositif de convoyeur à bande (3) étant disposé avec la section d'éjection (11) à l'intérieur du convoyeur (2), afin de renvoyer le flux de matériau (S) dans la direction de transport (R2).

13. Machine agricole (30) selon la revendication 12, **caractérisée en ce que** le dispositif de tri (9) est formé pour le pilotage du basculement vers l'intérieur de la section d'éjection (11) après la détection du corps étranger (F) lors de l'éjection hors du dispositif de transport (1), le dispositif de tri (9) présentant au moins un autre capteur, l'autre capteur étant disposé sur la deuxième section de station de déviation (12b) et/ou la sur section d'éjection (11) pour la détection de l'éjection du corps étranger (F).

14. Machine agricole (30) selon l'une quelconque des revendications précédentes, **caractérisée en ce que** la machine agricole (30) est formée comme une presse à balles.
